# EUROPEAN PATENT SPECIFICATION

(11) **EP 3 099 917 B1**
(45) Date of publication and mention of the grant of the patent: **11.10.2023**
(21) Application number: 15701523.1
(22) Date of filing: 27.01.2015
(51) Int. Cl.: F02G 1/04

(54) **A COMPRESSOR TRAIN WITH A STIRLING ENGINE**
VERDICHTERSTRANG MIT EINEM STIRLING-MOTOR
TRAIN DE COMPRESSEUR À MOTEUR STIRLING

(30) Priority: 29.01.2014 IT FI20140017
(43) Date of publication of application: 07.12.2016
(73) Proprietor: Nuovo Pignone Tecnologie - S.r.l., 50127 Florence (IT)
(72) Inventor: TOGNARELLI, Leonardo, I-50127 Florence (IT); BAGAGLI, Riccardo, I-50127 Florence (IT); BUFFA, Francesco, I-50127 Florence (IT); SANTINI, Marco, I-50127 Florence (IT)
(74) Representative: Novagraaf Group
(86) International application number: PCT/EP2015/051559
(87) International publication number: WO 2015/113951

(56) References cited:
- EP-A1- 2 123 893
- DE-A1- 4 132 939
- DE-A1- 4 204 261
- JP-A- S 631 750
- JP-A- H1 182 295
- JP-A- H02 280 629
- JP-A- 2000 213 418
- JP-A- 2010 138 762
- US-A- 4 738 106
- US-A1- 2009 205 335

## Description

### FIELD OF THE INVENTION

The subject matter disclosed herein concerns improvements to systems for driving reciprocating compressors.

### DESCRIPTION OF THE RELATED ART

JP H11 82295 A discloses a gas compressor driven by a stirling engine which has a buffer space. US 4 738 106 A discloses a system for driving a reciprocating compressor.

Reciprocating compressors are used in several industrial fields for boosting the pressure of a gas. Typical applications of reciprocating compressors are in refineries, e.g. in reformer, hydrocracker and hydrotreater plants. Typical applications of reciprocating compressors can be found also in the polymer industry, for manufacturing of ethylene and derivatives.

Reciprocating compressors are typically driven by electric motors, which are powered by electric energy from an electric power distribution grid. In some known embodiments, reciprocating compressors are driven by internal combustion engines, such as reciprocating Diesel or Otto engines. In other installations, steam turbines are used for driving the reciprocating compressors. A large amount of high-quality energy is thus usually needed for driving the compressors.

### SUMMARY OF THE INVENTION

Industrial sites where reciprocating compressors are applied, usually produce waste heat. The present disclosure suggests using heat, in particular low-temperature and/or waste heat, to reduce the power consumption of reciprocating compressor driving systems.

According to the present disclosure, a system for driving a reciprocating compressor according to claim 1 is provided.

The reciprocating compressor can be a double-effect compressor and comprise one or more cylinders and pistons slidingly arranged therein, driven by the crankshaft. The pistons can be connected to the crankshaft via respective piston rods and crossheads. In preferred embodiments the Stirling engine exploits waste heat from a thermal energy source for waste heat recovery (whr) purposes.

In some embodiments, a heat source comprised of a burner can be provided, for burning a fuel and provide thermal energy to the Stirling engine.

According to the invention, the burner combined with a source of waste heat.

The Stirling engine and the reciprocating compressor are mechanically connectable so that they rotate at substantially the same rotational speed. Gearboxes can thus be dispensed with and the overall efficiency of the system can be improved.

The supplemental driver can be provided in combination with the Stirling engine, to provide supplemental mechanical power, when insufficient mechanical power is made available by the Stirling engine to drive the reciprocating compressor.

In some embodiments the supplemental driver comprises an electric machine. Preferably, the electric machine is a reversible electric machine, capable of operating in a generator or in a motor mode selectively. When operating as a generator, the electric machine converts surplus mechanical power from the Stirling engine into electric power. When operating in the motor mode the electric machine can operate as a helper to supplement mechanical power to drive the reciprocating compressor. In preferred embodiments the electric machine is a variable speed electric machine, e.g. connected to an electric power distribution grid through a variable frequency driver. The electric machine can be operated as a starter to start the Stirling engine. In other embodiments a separate starter can be provided.

Features and embodiments are disclosed here below and are further set forth in the appended claims, which form an integral part of the present description. The above brief description sets forth features of the various embodiments of the present invention in order that the detailed description that follows may be better understood and in order that the present contributions to the art may be better appreciated. There are, of course, other features of the invention that will be described hereinafter and which will be set forth in the appended claims. In this respect, before explaining several embodiments of the invention in details, it is understood that the various embodiments of the invention are not limited in their application to the details of the construction and to the arrangements of the components set forth in the following description or illustrated in the drawings. The invention is capable of other embodiments and of being practiced and carried out in various ways. Also, it is to be understood that the phraseology and terminology employed herein are for the purpose of description and should not be regarded as limiting.

As such, those skilled in the art will appreciate that the conception, upon which the disclosure is based, may readily be utilized as a basis for designing other structures, methods, and/or systems for carrying out the several purposes of the present invention. It is important, therefore, that the claims be regarded as including such equivalent constructions insofar as they do not depart from the scope of the present invention as defined in the claims.

### BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:
Fig. 1A illustrates a sectional view of a double-effect reciprocating compressor;
Fig. 1B illustrates a schematic top plan view of a multi-cylinder reciprocating compressor;
Fig. 2 illustrates a cross-sectional schematic view of a Stirling engine of the α-type;
Figs. 3 to 8 illustrate various embodiments of a system according to the present disclosure;
Figs. 9 and 10 illustrate two exemplary applications of a system according to the present disclosure in refinery plants.

### DETAILED DESCRIPTION OF EMBODIMENTS OF THE INVENTION

The following detailed description of the exemplary embodiments refers to the accompanying drawings. The same reference numbers in different drawings identify the same or similar elements. Additionally, the drawings are not necessarily drawn to scale. Also, the following detailed description does not limit the invention. Instead, the scope of the invention is defined by the appended claims.

Reference throughout the specification to "one embodiment" or "an embodiment" or "some embodiments" means that the particular feature, structure or characteristic described in connection with an embodiment is included in at least one embodiment of the subject matter disclosed. Thus, the appearance of the phrase "in one embodiment" or "in an embodiment" or "in some embodiments" in various places throughout the specification is not necessarily referring to the same embodiment(s). Further, the particular features, structures or characteristics may be combined in any suitable manner in one or more embodiments.

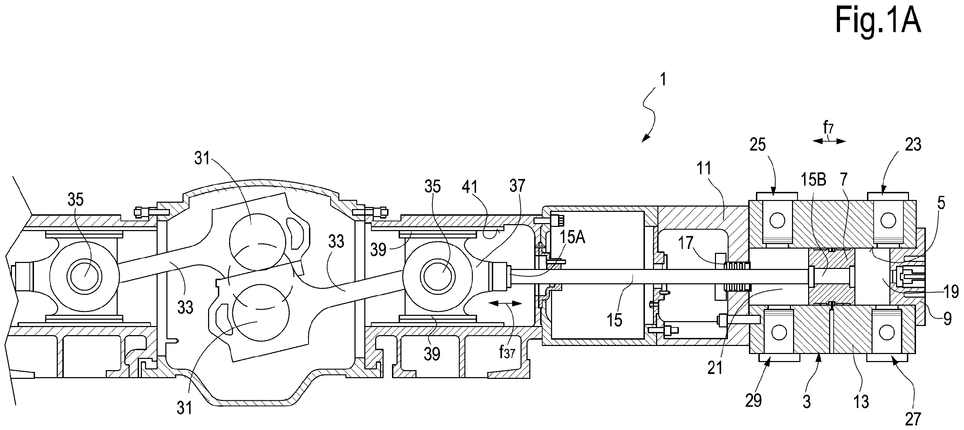

A sectional view of a double-effect reciprocating compressor which can be used in a system according to the subject matter disclosed herein is shown in Fig. 1 A.

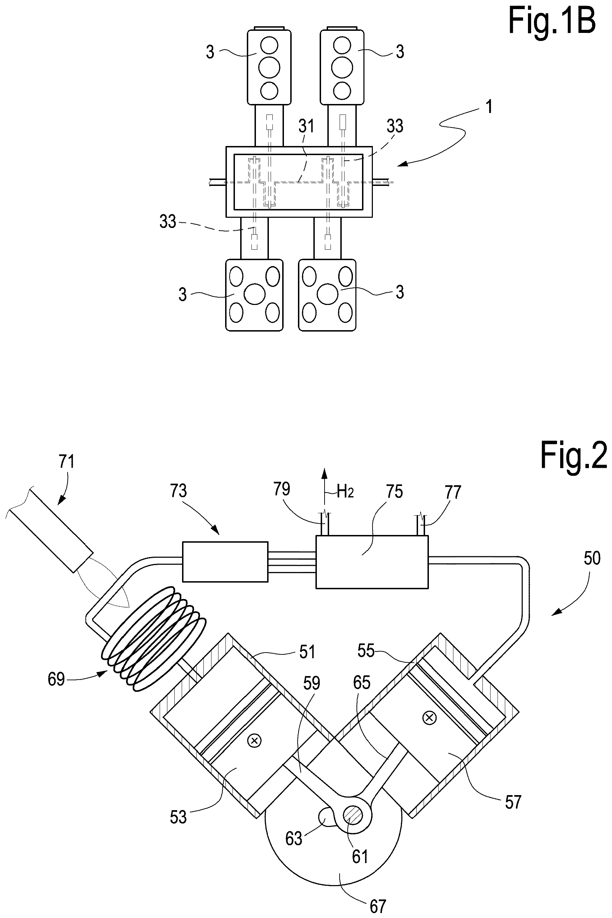

A system according to the present disclosure can comprise one or more reciprocating compressors. In some embodiments, double-effect reciprocating compressors are used. Referring to Fig.2, in one embodiment a double-effect reciprocating compressor 1 comprises a cylinder 3 having an inner cylindrical cavity 5 housing a piston 7. The piston 7 is reciprocatingly moving inside the cavity 5 according to double arrow f7. The compressor can be comprised of more than one cylinder-piston arrangement, the pistons being driven by a common crankshaft. The piston separates the cavity 5 of cylinder 3 into two chambers.

The cavity 5 has a head end and a crank end, which can be closed by respective closure elements 9 and 11. The closure elements can be constrained to a cylindrical barrel 13. The closure element 11 can be provided with a passage through which a piston rod 15 can extend. Packing cups 17 can provide a sealing around the piston rod 15. The piston 7 divides the inner cavity 5 of the cylinder 13 into respective first chamber 19 and second chamber 21, also named head end chamber and crank end chamber, respectively.

Each first and second chamber 19 and 21 is connected through respective suction valves and discharge valves to a suction duct and a discharge duct, not shown. In some embodiments the suction valves and the discharge valves can be automatic valves, for example so-called ring valves or the like. Suction valve arrangements for the first and second chambers 19 and 21 are labeled 23 and 25, respectively. A discharge valve assembly for the first chamber 19 is shown at 27, while the discharge valve assembly of the second chamber 21 is shown at 29. The number of suction and discharge valves for each one of the two chambers 19 and 21 can be different, depending upon the dimension and design of the reciprocating compressor.

The reciprocating movement of the piston 7 and of the piston rod 15 can be controlled by a crankshaft 31 through a connecting rod 33. The connecting rod 33 can be hinged at 35 to a crosshead 37, which can be provided with crosshead sliding shoes 39 in sliding contact with sliding surfaces 41. The rotation movement of the crankshaft 31 is converted into reciprocating rectilinear movement of the crosshead 37 according to double arrow f37. The piston rod 15 can be connected with a first end 15A to the crosshead 37 and with a second end 15B to the piston 7 and transmits the movement from the crosshead 37 to the piston 7.

The reciprocating compressor 1 can be comprised of one or more cylinders. In the schematic top plan view of Fig. 1B an embodiment of the reciprocating compressor 1 including four cylinders 3 is illustrated by way of example.

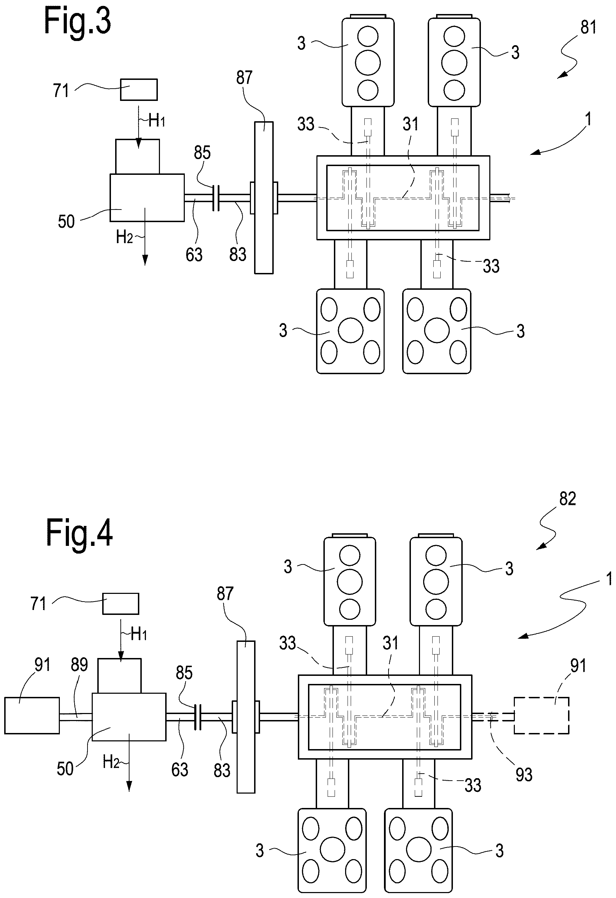

As will be described in greater detail with reference to Figs. 3 to 6, the reciprocating compressor 1 can be driven by a compressor driver in combination with a Stirling engine; in some embodiments only a Stirling engine can be used to drive the reciprocating compressor. An electric motor can be used to as a starter.

A schematic cross-sectional view of a Stirling engine of the α-type is illustrated in Fig. 2. A Stirling engine 50 of the so called α-type comprises a first cylinder 51, wherein a first piston 53 is slidingly movable. A second cylinder 55 is further provided, oriented at e.g. 90° with respect to the cylinder 51. A second piston 57 is slidingly arranged in the second cylinder 55.

A first connecting rod 59 connects the first piston 53 to a crank pin 61 forming part of an output 63. A second connecting rod 65 connects the second piston 57 to the same output 63. A flywheel 67 can be mounted on the output shaft 63.

The Stirling engine 50 can comprise a hot end with a heater 69 which receives heat from a heat source 71. The heater is in flow communication with the interior of the first cylinder 51. A flow path connects the heater 69 to a regenerator 73, a cooler 75 and the interior of the second cylinder 55. The cooler 75 can be in thermal contact with a cold source or heat sink, and forms a cold end of the Stirling engine 50. The heat sink can be the ambient air. In some embodiments, a cooler with a cooling circuit, for example a water cooling circuit can be used as a heat sink. In Fig. 2 a cooling circuit is schematically represented by inlet and outlet manifolds 77 and 79.

The operation of the Stirling engine is known to those skilled in the art and will not be described in detail herein. In general terms, a working gas contained in the closed system formed by the inner volumes of cylinder-piston system 51, 53, cylinder-piston system 55-57, heater 69, regenerator 73, cooler 75 and relevant piping is subject to a thermal cycle including cyclic compression, heating, expansion and cooling. The thermodynamic cycle performed by the working gas in the Stirling engine 50 converts part of the thermal energy delivered by the thermal source 71 to the hot end of the Stirling engine into useful mechanical power available on the output shaft 63.

The α-type Stirling engine shown in Fig. 2 is only one of several possible configurations of Stirling engines. Other useful Stirling engine arrangements are of the β-type and γ-type of Stirling engines, which will not be described herein and which are known to those skilled in the art.

The various embodiments of the system disclosed herein can utilize an α-type Stirling engine as schematically shown in Fig. 2, or else any other suitable Stirling engine configuration, suitable for converting thermal energy available from the thermal energy source or heat source 71 into mechanical power, which is used to drive the reciprocating compressor 1 and/or to produce electric power, as will be described here below.

Fig. 3 shows a first embodiment of a reciprocating compressor system 81 according to the disclosure. The reciprocating compressor system 81 can be part of a more comprehensive industrial plant, where one or more processes are provided, e.g. including turbomachines, such as steam or gas turbines, reciprocating internal combustion engines, heat exchangers, heaters, boilers and other installations. Waste heat can be produced as side product in one or more processes present in the plant. According to some embodiments of the reciprocating compressor systems disclosed herein, at least part of the waste heat available is used to power the Stirling engine which in turns drives the reciprocating compressor. For instance, waste heat can be recovered from exhaust combustion gases from one or more internal combustion engines, such as gas turbines, or else from condensing steam in steam turbine arrangements.

In other embodiments, heat for powering the Stirling engine can be supplemented by solar collectors.

More than one source of thermal power, being it in the form of waste heat to be recovered or any other form, can be combined to power the Stirling engine.

The reciprocating compressor system 81 can comprise a reciprocating compressor 1, in turn comprised of for example four cylinders 3 and a crankshaft 31. Although four cylinders are illustrated in Fig.3, other embodiments of reciprocating compressor systems disclosed herein can be provide with one, two, three, five or more cylinders.

The crankshaft 31 of reciprocating compressor 1 is connected through a shaft 83 to the output shaft 63 of Stirling engine 50, which receives thermal energy from one or more thermal energy or heat sources, schematically shown at 71. A clutch 85 can be provided between the Stirling engine 50 and the reciprocating compressor 1, to mechanically disconnect the Stirling engine 50 from the reciprocating compressor 1, if required. In other embodiments the clutch 85 can be omitted. In yet further embodiments an elastic joint can be provided on shaft 83, in combination with or in replacement of the clutch 85.

According to some embodiments, one or more flywheels can be provided along the rotating shaft line of the Stirling engine and reciprocating compressor system. A flywheel 87 is schematically illustrated in Fig.3, between the Stirling engine outputs shaft 63 and the reciprocating compressor 1.

Heat H1 from the thermal energy source 71 is delivered to the hot end, namely to the heater 69 of the Stirling engine 50. The Stirling engine 50 converts part of the thermal energy into mechanical power which is used to drive the reciprocating compressor 1. Low temperature thermal energy which is not converted into mechanical power is discharged at the cold end of the Stirling engine 50, at the cooler or heat sink 75 thereof, as schematically represented by arrow H2 in Fig. 3.

As noted above, the thermal energy H1 delivered to the hot end of the Stirling engine 50 can be any kind of thermal energy available in an industrial facility, where the reciprocating compressor 1 is arranged. Preferably the thermal energy H1 is waste heat coming from a different industrial process, for example in a refinery or polymer producing plant. The system 81 of Fig. 3 thus allows recovering waste heat and exploiting said heat to drive the reciprocating compressor 1.

Fig. 4 schematically illustrates a further embodiment of a reciprocating compressor system 82 utilizing a Stirling engine 50 for driving a reciprocating compressor 1. In Fig. 4 the same reference numbers designate components, parts or elements corresponding to components, parts or elements of the embodiment of Fig. 3.

In Fig. 4 the Stirling engine is drivingly connected through a shaft 83 with the reciprocating compressor 1 on the one side and with a further shaft 89 with a different driver 91. In some embodiments the driver 91 can be an electric motor or an internal combustion engine, for example a reciprocating internal combustion engine, such as a Diesel or Otto engine. In some embodiments, the driver 91 can be used as a starter of the Stirling engine 50.

Preferably, the rotational speed of the driver 91 is substantially the same as the rotational speed of the Stirling engine and of the crankshaft of the reciprocating compressor 1, such that no gearboxes or other speed manipulating devices are required.

One or more clutches can be provided along shaft 89 and/or along shaft 83 to mechanically disconnect one piece of machinery from the other along the shaft line.

In other embodiments the driver 91 can be connected through a shaft 93 directly to the reciprocating compressor 1. In this case, the crankshaft 33 of the reciprocating compressor 1 has a first end drivingly connected through shaft 83 to the output shaft 63 of the Stirling engine 50 and a second end drivingly connected through shaft 93 to the driver 91.

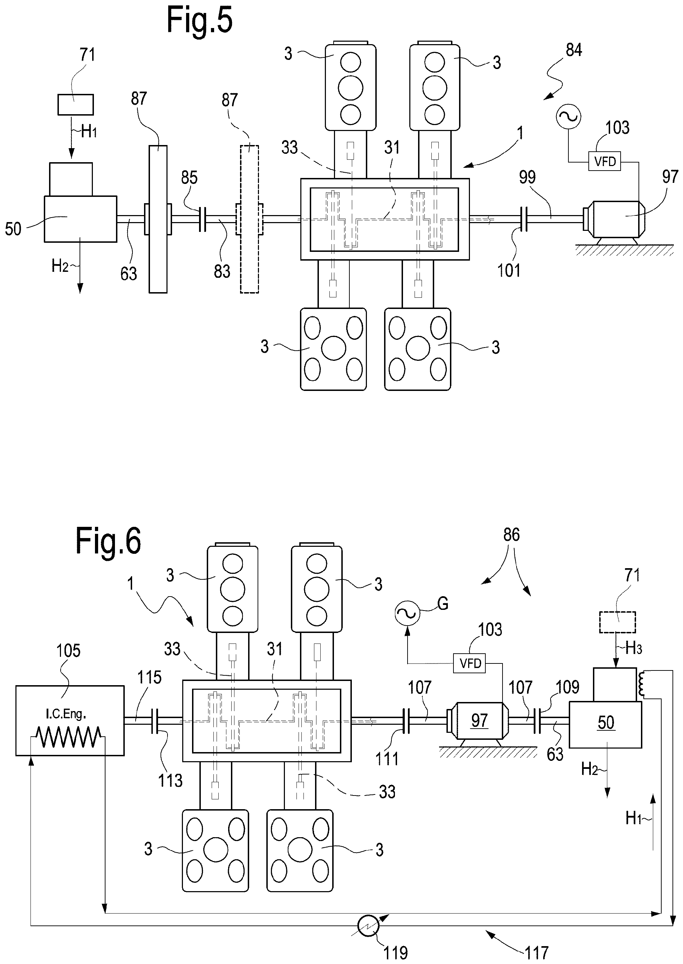

Fig. 5 schematically illustrates a further embodiment of a reciprocating compressor system 84 according to the present disclosure. The same reference numbers indicates the same or equivalent components as in the embodiments of Figs 3 and 4. The system 84 is comprised of a reciprocating compressor 1. The reciprocating compressor 1 can comprise one or more cylinders 3 driven by a crankshaft 31. The crankshaft 31 is drivingly connected through a shaft 83 to a Stirling engine 50 having an output shaft 63. A clutch 85 can be provided between the crankshaft 31 and the output shaft 63 of the Stirling engine 50. At least one flywheel 87 can further be mounted on the shaft line between the Stirling engine 50 and the reciprocating compressor 1. In the schematic drawing of Fig. 5 two alternative positions for a flywheel 87 are shown in solid and dashed lines respectively.

The crankshaft 31 of the reciprocating compressor 1 can be further drivingly connected to an electric machine 97, preferably a reversible electric machine which can operate as an electric motor or as an electric generator selectively. In some embodiments the electric machine 97 can be connected to the opposite end of the crankshaft 31 with respect to the end connected to the output shaft 63 of the Stirling engine 50. Reference number 99 indicates a shaft line connecting the electric machine 97 to the crankshaft 31 of the reciprocating compressor 1. A clutch 101 can be provided between the reciprocating compressor 1 and the electric machine 97.

According to some embodiments, the electric machine 97 is connected to an electric power distribution grid G providing the electric power for driving the electric machine 97, or receiving electric power generated by the electric machine 97, depending upon the operating conditions of the system 84. The electric machine 97 can be driven at variable speed, for example through a variable frequency driver 103 interposed between the electric power distribution grid G and the electric machine 97.

A thermal energy source 71 provides heat H1 to the hot end of the Stirling engine 50, while low temperature heat H2 is discharged at the cold end of the Stirling engine 50.

The system 84 can operate as follows.

If thermal energy, for example waste heat is available from the source 71, the thermal energy is used to power the Stirling engine 50 which converts part of the thermal energy into useful mechanical power on the output shaft 63 thereof. The clutch 85 is engaged and the reciprocating compressor 1 can be driven by entirely or partly driven by the power provided by the Stirling engine 50. The Stirling engine 50 can be started by means of the electric machine 97. If the mechanical power generated by the Stirling engine 50 once started is sufficient to drive the reciprocating compressor 1, the electric machine 97 can be turned off. If between reciprocating compressor 1 and the electric machine 97 a clutch 101 is provided, the clutch can be disengaged when the electric machine 97 is turned off. Alternatively, the clutch can remain engaged and/or can be simply omitted. The electric machine 97 will then rotate idly while the reciprocating compressor 1 is driven by the Stirling engine 50 alone.

If the mechanical power generated by the Stirling engine 50 is insufficient to drive the reciprocating compressor 1, the electric machine 97 can be operated in the motor mode and act as a helper, thus providing supplemental mechanical power which, in combination with the power provided by the Stirling engine 50, is sufficient for driving the reciprocating compressor 1. The clutch 101, if present, is engaged.

The machines of system 84, namely the Stirling engine 50, the reciprocating compressor 1 and the electric machine 97 can rotate at the same speed. The rotational speed can be dictated by the operating conditions of the reciprocating compressor 1. The rotational speed of the electric machine 97 can be adjusted accordingly through the variable frequency driver 103.

If the power generated by the Stirling engine 50 is more than the power required to drive the reciprocating compressor 1, the excess mechanical power can be transferred through shaft line 99 to the electric machine 97, and the latter can be operated in the generator mode, converting the mechanical power into electric power. The latter is injected into the electric power distribution grid G. Suitable electric frequency is obtained by means of the variable frequency driver 103, irrespective of the rotational speed of the system 84.

If no power is provided by the Stirling engine 50, the clutch 85 can be disengaged and the reciprocating compressor 1 can be driven by the electric machine 97 only, the latter being operated in the motor mode.

With the arrangement of Fig. 5 thermal energy, even at relatively low temperature, can be converted into useful mechanical power to reduce the consumption of electric power from grid G or, under certain operating conditions, can be used to deliver electric power on the grid G in addition to driven the reciprocating compressor 1. The system 84 can be properly controlled according to the operating conditions of the reciprocating compressor 1, independently of the amount of thermal energy available from source 71, due to the combination of the Stirling engine 50 with the electric machine 97, so that the reciprocating compressor 1 can be operated under required conditions even if little or no thermal energy is available from source 71.

Fig. 6 schematically illustrates a further embodiment of a system 86 for driving a reciprocating compressor 1, according to the present disclosure. The same reference numbers as in Figs. 3, 4 and 5 are used to designate the same or corresponding parts or elements. The crank shaft 31 of the reciprocating compressor 1 forms part of a shaft line along which a Stirling engine 50, an electric machine 97 and a further driver, for example a reciprocating internal combustion engine 105, are arranged. The internal combustion engine 105 can be a Diesel engine or an Otto engine, for example. In preferred embodiments the machines of the system 86 are connected so that the rotational speed of the various machineries is substantially the same and a gearbox can be dispensed with.

In some embodiments, the Stirling engine 50 can be arranged at one end of the shaft line and the reciprocating internal combustion engine 105 can be arranged at the opposite end thereof, while the reciprocating compressor 1 and the electric machine 97 are arranged in-between. The reciprocating compressor 1 can be located directly adjacent the reciprocating internal combustion engine 105, while the electric machine 97 can be located between the reciprocating compressor 1 and the Stirling engine 50.

In some embodiments, a through shaft 107 of the electric machine 97 is drivingly connected at one end to the output shaft 63 of the Stirling engine 50. A clutch 109 can be provided between the shaft 107 of the electric machine 97 and the output shaft 63 of the Stirling engine 50. A further clutch 111 can be provided between the shaft 107 electric machine of the electric machine 97 and the crankshaft 31 of the reciprocating compressor.

The crankshaft 31 of the reciprocating compressor 1 can be connected, at an end opposite the electric machine 97, to the reciprocating internal combustion engine 105. In some embodiments, a clutch 113 can be arranged between the crankshaft 31 and the shaft 115 of the reciprocating internal combustion engine 105.

One or more flywheels can be arranged in suitable positions along the shaft line. In some embodiments the reciprocating machines, namely the reciprocating internal combustion engine 105, the reciprocating compressor 1 and the Stirling engine 50 are provided each with its own flywheel, not shown. In other embodiments, just one or two flywheels can be arranged in suitable locations along the shaft line.

The hot end of the Stirling engine 50 is provided with waste heat from the internal combustion engine 105. This is schematically represented by a heat transfer circuit schematically shown at 117. H1 represents the waste heat transferred from the reciprocating internal combustion engine 105 to the hot end of the Stirling engine 50. Waste heat can be recovered from the exhausted combustion gases discharged from the internal combustion engine 105. Heat can be recovered from the engine cooling system of the reciprocating internal combustion engine 105, for example from cooling water circulating in the reciprocating internal combustion engine 105. Heat can also be recovered from the oil of the lubricating system of the said engine 105. Only one, two or all three waste heat sources can be exploited for powering the Stirling engine 50. Thus, the reciprocating internal combustion engine 105 provides a source of thermal energy or heat towards the Stirling engine 50.

Fig. 6 illustrates a closed heat transfer circuit 117, e.g. for recovering heat from the cooling system of the reciprocating internal combustion engine 105 utilizing the same cooling liquid that circulates through the internal combustion engine 105. In other embodiments, an intermediate circuit where an auxiliary heat transfer medium circulates, can be used, removing heat from the cooling liquid circulating in the reciprocating internal combustion engine 105 by means of a heat exchanger, for example, and transferring the removed heat to the hot end of the Stirling engine 50.

If the temperature of the heat transfer medium or cooling liquid circulating in the closed loop 117 at the outlet of the hot end of the Stirling engine 50 is still too high to provide sufficient refrigeration of the reciprocating internal combustion engine 105, an auxiliary heat exchanger 119 can be provided along the return branch of the closed loop 117.

The system 86 of Fig. 6 can operate as follows.

The reciprocating compressor 1 can be driven into rotation by power provided entirely by the reciprocating internal combustion engine 105, or by the electric machine 97, or by the Stirling engine 50. In some operating conditions the reciprocating compressor 1 can be driven by two or all three drivers 105, 50 and 97 in combination.

If only electric power is used for driving the reciprocating compressor 1, for example if no heat is available for the Stirling engine 50 and the reciprocating internal combustion engine 105 is shut down for whatever reason, the clutches 113 and 109 can be disengaged and the electric machine 97 can drive directly the reciprocating compressor 1 through shaft 107 and clutch 111, if provided.

In other operating conditions, the reciprocating internal combustion engine 105 can be operative and mechanical power generated therefrom can be used, through shaft 115 and clutch 113, if provided, to drive the crankshaft 31 of the reciprocating compressor 1. Waste heat from the reciprocating internal combustion engine 105 can be exploited to drive the Stirling engine 50, which in turn provides part of the power required to drive the reciprocating compressor 1. Mechanical power generated by the Stirling engine 50 flows through the electric machine 97 by means of the double-ended shaft 107, the clutches 109 and 111 (if present) being engaged. The electric machine 97 is fly-wheeled. The reciprocating compressor 1 is thus driven by combined power from the reciprocating internal combustion engine 105 and from the Stirling engine 50.

If the power provided by the internal combustion engine 105 and by the Stirling engine 50 (if running) is higher than the power required to drive the reciprocating compressor 1, excess mechanical power can be converted into electric power by the electric machine 97, operated in the generator mode. The variable frequency driver 103 is used to convert the electric power at the required frequency before delivering the electric power generated by the electric machine 97 to the electric power distribution grid G.

An external heat source 71 can still be provided, for example if waste heat from another process is available. H3 represents additional heat provided by the additional heat source 71 to the hot end of the Stirling engine 50.

In some operating conditions, if for example sufficient waste heat is provided by the heat source 71, the internal combustion engine 105 can be kept inoperative and possibly disengaged from the crankshaft 31 by disengaging clutch 113. Mechanical power for driving the reciprocating compressor 1 can be provided entirely by the Stirling engine 50 or by the latter in combination with the electric machine 97.

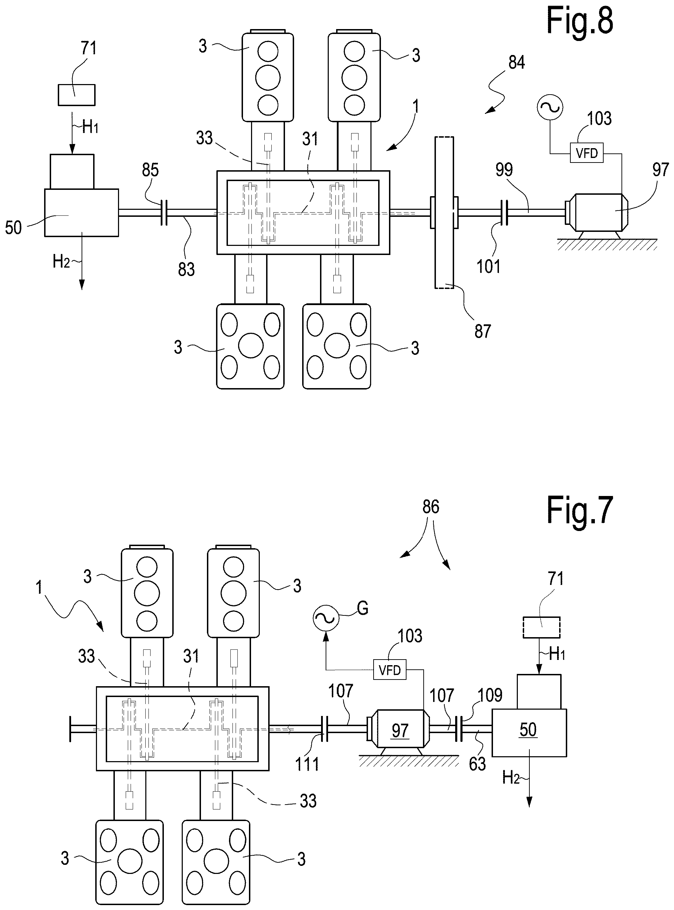

Figs. 7 and 8 schematically illustrate further embodiments of systems according to the present disclosure. The same reference numbers designate the same parts or components as in the previously described figures, or parts and components equivalent thereto.

Specifically, Fig.7 illustrates an arrangement similar to the arrangement of Fig. 5, wherein the flywheel 87 has been moved on the shaft line portion between the reciprocating compressor 1 and the electric machine 97.

Fig. 8 illustrates an arrangement similar to Fig.6, where the internal combustion engine 105 has been omitted, and heat H1 to the hot end of the Stirling engine 50 is provided entirely by a heat source 71, e.g. a waste heat recovery source.

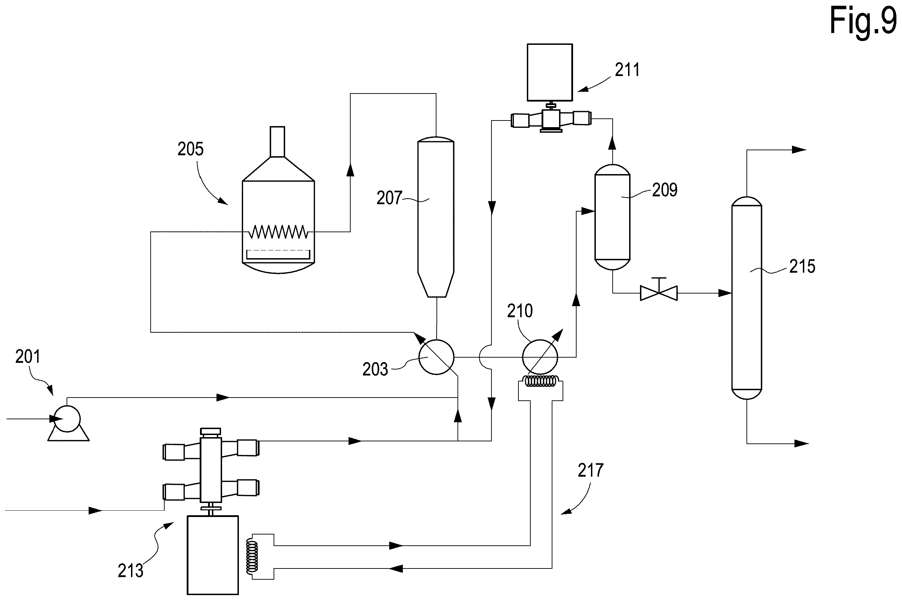

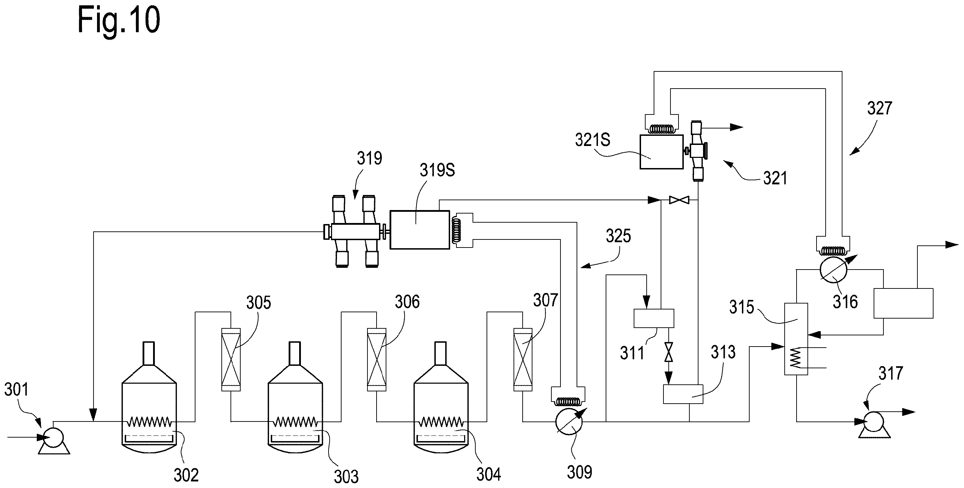

The exemplary embodiments of the subject matter disclosed herein can be applied in several industrial plants where reciprocating compressors are used and where sources of waste heat are available, e.g. heat exchangers or the like. Figs. 9 and 10 schematically illustrate two examples of possible applications of the subject matter disclosed herein, in a hydrotreater and in a reformer respectively.

More specifically, Fig.9 illustrates a hydrotreater flow chart. The overall structure of the plant is known per se and will not be described in great detail. The plant can comprise a charge stock pump 201, a pre-heating exchanger 203, a heater 205 and a reactor 207. The output flow from reactor 207 is partly cooled in the pre-heating exchanger 203 by exchanging heat against incoming stock from pump 201. The plant further comprises a cooler 210 downstream of the reactor 207. Process flow from the reactor 207 is delivered to a hydrogen separator 209. Gaseous hydrogen is compressed by a reciprocating compressor 211 and recycled towards the cold side of preheating exchanger 203, while the liquid part of the flow is delivered to a stabilizer 215. Inlet hydrogen is pumped by a hydrogen make-up reciprocating compressor 213, added to the hydrogen flow from reciprocating compressor 211 and to the stock from charge stock pump 201. One or both the reciprocating compressors 211 and 213 can be drivingly connected to a Stirling engine as described above.

Waste heat from the heat exchanger 210 can be used to energize a Stirling engine provided for driving the reciprocating compressor 213, as schematically represented by a heat transfer loop 217. Alternatively or in addition to transfer loop 217 a heat transfer loop can be used to deliver waste heat to a Stirling engine driving the reciprocating compressor 211.

Fig. 10 schematically illustrates a reformer flow chart comprised of a naphtha charge pump 301 which delivers the process flow through a furnace 302 and two serially arranged re-heat furnaces 303, 304. Reactors 305, 306, 307 are arranged downstream of each furnace 302, 303, 304. The hydrocarbon flow from reactor 307 is liquefied in a cooler 309, and subsequently separated into a liquid phase and a gaseous phase in a high pressure separator 311 and a low pressure separator 313 respectively. Liquid from the low pressure separator 313 is fed to a stabilizer 315, wherefrom light gas is extracted from the top part and cooled in a cooler 316, while liquid is extracted by a reformate pump 317.

The plant further comprises a hydrogen recycle reciprocating compressor 319 whereto gas from the separator 311 is delivered. Pumped hydrogen from the reciprocating compressor 319 is fed to the furnace 302.

A further reciprocating compressor 321 receives hydrogen from the low pressure separator 313 and delivers hydrogen to downstream processes.

Reciprocating compressor 319 or reciprocating compressor 321 or both can be drivingly connected to a Stirling engine as disclosed herein above, in order to at least partly recover waste heat from either the liquefaction cooler 309, the cooler 316 of stabilizer 315 or both. In the exemplary installation a first heat recovery loop 325transfers waste heat from the liquefaction cooler 309 to the Stirling engine 319S drivingly connected to reciprocating compressor 319S. A second heat recovery loop 327 transfers waste heat from the cooler 316 to the Stirling engine 321S drivingly connected to the reciprocating compressor 321.

In the above disclosed embodiments, reference has been made to a heat source 71 wherefrom thermal energy, e.g. recovered waste heat, is provided to the hot end of the Stirling engine 70. The cold end of the Stirling engine can be at ambient or room temperature, and can be cooled e.g. by ambient air or water. Arrangements of this kind are particularly useful in situations where a source of waste heat is available, such as in refineries or the like. In other embodiments, the hot end of the Stirling engine can be at room or ambient temperature and the cold end can be in contact e.g. with a flow of cold fluid. Also in this kind of arrangement, the temperature difference between hot source and cold source can be obtained by exploiting an existing flow of cold fluid, such as those available in re-gasifying plants, where liquefied natural gas (LNG) is again brought in the gaseous state.

While the disclosed embodiments of the subject matter described herein have been shown in the drawings and fully described above with particularity and detail in connection with several exemplary embodiments, it will be apparent to those of ordinary skill in the art that many modifications, changes, and omissions are possible without materially departing from the novel teachings, the principles and concepts set forth herein, and advantages of the subject matter recited in the appended claims. Hence, the proper scope of the disclosed innovations should be determined only by the appended claims so as to encompass all such modifications, changes, and omissions.

## Claims

1. A system for driving a reciprocating compressor comprising:
a reciprocating compressor (1) with at least one cylinder (3), a piston (7) slidingly movable in said cylinder (3), a crankshaft (31) for moving said piston (7) in said cylinder (3);
a Stirling engine (50) with a hot end, a cold end, and an output shaft (63);
a driving connection (83; 107) between the output shaft (63) of the Stirling engine and the crankshaft (31) of the reciprocating compressor (1); and
a heat source (71) arranged and configured for providing heat to the hot end of the Stirling engine (50);
**characterized by** a reciprocating internal combustion engine (105) and a driving connection (115) between the reciprocating internal combustion engine (105) and the reciprocating compressor (1) for providing supplemental power to the reciprocating compressor (1); and
a heat transfer circuit (117) for transferring waste heat from the internal combustion engine (105) to the hot end of the Stirling engine (50).

2. The system of claim 1, wherein the rotational speed of the output shaft (63) of the Stirling engine (50) and the rotational speed of the crankshaft (31) of the reciprocating compressor (1) are substantially equal.

3. The system of any one of the preceding claims, further comprising a clutch (85; 111, 109) arranged between the output shaft (63) of the Stirling engine (50) and the crankshaft (31) of the reciprocating compressor (1).

4. The system of any preceding claim, further comprising an electric machine (97) and a driving connection (99) between the electric machine (97) and the crankshaft (31) of the reciprocating compressor (1).

5. The system of claim 4, wherein the rotational speed of the electric machine (97) and the rotational speed of the reciprocating compressor (1) are substantially equal.

6. The system of claim 4 or 5, wherein the rotational speed of the electric machine (97) and the rotational speed of the output shaft (63) of the Stirling engine (1) are substantially equal when the electric machine (97) and the Stirling engine (1) are both drivingly connected to the reciprocating compressor (1).

7. The system of any one of claims 4 to 6, wherein the electric machine (97) is connected to an electric power distribution grid (G) through a variable frequency driver (103).

8. The system of any one of claims 4 to 7, wherein the electric machine (97) is a reversible electric machine, configured for operating selectively in a motor mode or in a generator mode.

9. The system of any one of claims 4 to 8, further comprising a clutch (101) between the electric machine (97) and the reciprocating compressor (1).

10. The system of any one of claims 4 to 9, further comprising a clutch (109) between the electric machine (97) and the Stirling engine (50).

11. The system of any one of claims 4 to 10, wherein the reciprocating compressor (1) is arranged between the Stirling engine (50) and the electric machine (97).

12. The system of any one of claims 4 to 11, wherein the reciprocating compressor (1) is selectively powered by:
mechanical power generated by the electric machine (97) only; or
mechanical power generated by the Stirling engine (50) only; or
combined power generated by the Stirling engine (50) and the electric machine (97).

13. The system of any one of claims 4 to 12, wherein the electric machine (97) is controlled and configured for operating in a generator mode and converting surplus mechanical power into useful electric power.

14. A method for driving a reciprocating compressor (1), comprising the steps of:
providing a reciprocating compressor (1) with at least one cylinder (3), a piston (7) slidingly movable in said cylinder (3), a crankshaft (31) for moving said piston (7) in said cylinder (3);
providing a Stirling engine (50) with a hot end, a cold end, and an output shaft (63);
drivingly connecting the output shaft (63) of the Stirling engine (50) to the crankshaft (31) of the reciprocating compressor (1);
providing thermal energy to the hot end of the Stirling engine (50) and partly converting the thermal energy into mechanical power with said Stirling engine (50); and
applying said mechanical power to the crankshaft (31) of the reciprocating compressor (1);
**characterized by** providing supplemental power to the reciprocating compressor (1) with a reciprocating internal combustion engine (105) and a driving connection (115) between the reciprocating internal combustion engine (105) and the reciprocating compressor (1); and
transferring waste heat from the internal combustion engine (105) to the hot end of the Stirling engine (50) by a heat transfer circuit (117).

## Patentansprüche

1. System zum Antreiben eines Hubkolbenverdichters, umfassend:
einen Hubkolbenverdichter (1) mit mindestens einem Zylinder (3), einem Kolben (7), der in dem Zylinder (3) gleitbar beweglich ist, eine Kurbelwelle (31) zum Bewegen des Kolbens (7) in dem Zylinder (3);
einen Stirling-Motor (50) mit einem heißen Ende, einem kalten Ende und einer Abtriebswelle (63);
eine Antriebsverbindung (83; 107) zwischen der Abtriebswelle (63) des Stirling-Motors und der Kurbelwelle (31) des Hubkolbenverdichters (1); und
eine Wärmequelle (71), die zum Bereitstellen von Wärme an das heiße Ende des Stirling-Motors (50) angeordnet und konfiguriert ist;
**gekennzeichnet durch** einen Hubkolbenverbrennungsmotor (105) und eine Antriebsverbindung (115) zwischen dem Hubkolbenverbrennungsmotor (105) und dem Hubkolbenverdichter (1) zum Bereitstellen zusätzlicher Leistung an den Hubkolbenkompressor (1); und
eine Wärmeübertragungsschaltung (117) zum Übertragen von Abwärme von dem Verbrennungsmotor (105) an das heiße Ende des Stirling-Motors (50).

2. System nach Anspruch 1, wobei die Drehzahl der Abtriebswelle (63) des Stirling-Motors (50) und die Drehzahl der Kurbelwelle (31) des Hubkolbenkompressors (1) im Wesentlichen gleich sind.

3. System nach einem der vorstehenden Ansprüche, ferner umfassend eine Kupplung (85; 111, 109), die zwischen der Abtriebswelle (63) des Stirling-Motors (50) und der Kurbelwelle (31) des Hubkolbenkompressors (1) angeordnet ist.

4. System nach einem der vorstehenden Ansprüche, ferner umfassend eine elektrische Maschine (97) und eine Antriebsverbindung (99) zwischen der elektrischen Maschine (97) und der Kurbelwelle (31) des Hubkolbenkompressors (1).

5. System nach Anspruch 4, wobei die Drehzahl der elektrischen Maschine (97) und die Drehzahl des Hubkolbenkompressors (1) im Wesentlichen gleich sind.

6. System nach Anspruch 4 oder 5, wobei die Drehzahl der elektrischen Maschine (97) und die Drehzahl der Abtriebswelle (63) des Stirling-Motors (1) im Wesentlichen gleich sind, wenn die elektrische Maschine (97) und der Stirling-Motor (1) beide antriebsmäßig mit dem Hubkolbenverdichter (1) verbunden sind.

7. System nach einem der Ansprüche 4 bis 6, wobei die elektrische Maschine (97) über einen variablen Frequenztreiber (103) mit einem elektrischen Leistungsverteilungsnetz (G) verbunden ist.

8. System nach einem der Ansprüche 4 bis 7, wobei die elektrische Maschine (97) eine reversible elektrische Maschine ist, die zum Betreiben wahlweise in einem Motormodus oder in einem Generatormodus konfiguriert ist.

9. System nach einem der Ansprüche 4 bis 8, ferner umfassend eine Kupplung (101) zwischen der elektrischen Maschine (97) und dem Hubkolbenverdichter (1).

10. System nach einem der Ansprüche 4 bis 9, ferner umfassend eine Kupplung (109) zwischen der elektrischen Maschine (97) und dem Stirling-Motor (50).

11. System nach einem der Ansprüche 4 bis 10, wobei der Hubkolbenverdichter (1) zwischen dem Stirling-Motor (50) und der elektrischen Maschine (97) angeordnet ist.

12. System nach einem der Ansprüche 4 bis 11, wobei der Hubkolbenverdichter (1) wahlweise versorgt wird durch:
mechanische Leistung, die nur durch die elektrische Maschine (97) erzeugt wird; oder
mechanische Leistung, die nur durch den Stirling-Motor (50) erzeugt wird; oder
kombinierte Leistung, die durch den Stirling-Motor (50) und die elektrische Maschine (97) erzeugt wird.

13. System nach einem der Ansprüche 4 bis 12, wobei die elektrische Maschine (97) gesteuert und konfiguriert ist, um in einem Generatormodus betrieben zu werden und überschüssige mechanische Leistung in nützliche elektrische Leistung umzuwandeln.

14. Verfahren zum Antreiben eines Hubkolbenkompressors (1), umfassend die Schritte:
Bereitstellen eines Hubkolbenkompressors (1) mit mindestens einem Zylinder (3), einem Kolben (7), der in dem Zylinder (3) gleitbar beweglich ist, einer Kurbelwelle (31) zum Bewegen des Kolbens (7) in dem Zylinder (3);
Bereitstellen eines Stirling-Motors (50) mit einem heißen Ende, einem kalten Ende und einer Abtriebswelle (63);
antriebsmäßiges Verbinden der Abtriebswelle (63) des Stirling-Motors (50) mit der Kurbelwelle (31) des Hubkolbenkompressors (1);
Bereitstellen von Wärmeenergie an das heiße Ende des Stirling-Motors (50) und teilweise Umwandeln der Wärmeenergie in mechanische Leistung mit dem Stirling-Motor (50); und
Aufbringen der mechanischen Leistung auf die Kurbelwelle (31) des Hubkolbenkompressors (1);
**gekennzeichnet durch** das Bereitstellen zusätzlicher Leistung an den Hubkolbenverdichter (1) mit einem Hubkolbenverbrennungsmotor (105) und einer Antriebsverbindung (115) zwischen dem Hubkolbenverbrennungsmotor (105) und dem Hubkolbenverdichter (1); und
Übertragen von Abwärme von dem Verbrennungsmotor (105) an das heiße Ende des Stirling-Motors (50) durch eine Wärmeübertragungsschaltung (117).

## Revendications

1. Système destiné à entraîner un compresseur alternatif comprenant :
un compresseur alternatif (1) avec au moins un cylindre (3), un piston (7) mobile de manière coulissante dans ledit cylindre (3), un vilebrequin (31) pour déplacer ledit piston (7) dans ledit cylindre (3) ;
un moteur Stirling (50) avec une extrémité chaude, une extrémité froide et un arbre de sortie (63) ;
une liaison d'entraînement (83 ; 107) entre l'arbre de sortie (63) du moteur Stirling et le vilebrequin (31) du compresseur alternatif (1) ; et
une source de chaleur (71) agencée et conçue pour fournir de la chaleur à l'extrémité chaude du moteur Stirling (50) ;
**caractérisé par** un moteur alternatif à combustion interne (105) et une liaison d'entraînement (115) entre le moteur alternatif à combustion interne (105) et le compresseur alternatif (1), pour fournir une puissance supplémentaire au compresseur alternatif (1) ; et
un circuit de transfert de chaleur (117) pour transférer la chaleur perdue du moteur à combustion interne (105) à l'extrémité chaude du moteur Stirling (50).

2. Système selon la revendication 1, dans lequel la vitesse de rotation de l'arbre de sortie (63) du moteur Stirling (50) et la vitesse de rotation du vilebrequin (31) du compresseur alternatif (1) sont sensiblement égales.

3. Procédé selon l'une quelconque des revendications précédentes, comprenant en outre un embrayage (85 ; 111, 109) agencé entre l'arbre de sortie (63) du moteur Stirling (50) et le vilebrequin (31) du compresseur alternatif (1).

4. Système selon l'une quelconque revendication précédente, comprenant en outre une machine électrique (97) et une liaison d'entraînement (99) entre la machine électrique (97) et le vilebrequin (31) du compresseur alternatif (1).

5. Système selon la revendication 4, dans lequel la vitesse de rotation de la machine électrique (97) et la vitesse de rotation du compresseur alternatif (1) sont sensiblement égales.

6. Système selon la revendication 4 ou 5, dans lequel la vitesse de rotation de la machine électrique (97) et la vitesse de rotation de l'arbre de sortie (63) du moteur Stirling (1) sont sensiblement égales lorsque la machine électrique (97) et le moteur Stirling (1) sont tous deux reliés par entraînement au compresseur alternatif (1).

7. Système selon l'une quelconque des revendications 4 à 6, dans lequel la machine électrique (97) est connectée à un réseau de distribution d'énergie électrique (G) à travers un pilote à fréquence variable (103).

8. Système selon l'une quelconque des revendications 4 à 7, dans lequel la machine électrique (97) est une machine électrique réversible, configurée pour fonctionner sélectivement en mode moteur ou en mode générateur.

9. Système selon l'une quelconque des revendications 4 à 8, comprenant en outre un embrayage (101) entre la machine électrique (97) et le compresseur alternatif (1).

10. Système selon l'une quelconque des revendications 4 à 9, comprenant en outre un embrayage (109) entre la machine électrique (97) et le moteur Stirling (50).

11. Système selon l'une quelconque des revendications 4 à 10, dans lequel le compresseur alternatif (1) est agencé entre le moteur Stirling (50) et la machine électrique (97).

12. Système selon l'une quelconque des revendications 4 à 11, dans lequel le compresseur alternatif (1) est alimenté de manière sélective par :
une puissance mécanique générée par la machine électrique (97) seulement ; ou
une puissance mécanique générée par le moteur Stirling (50) seulement ; ou
une puissance combinée générée par le moteur Stirling (50) et la machine électrique (97).

13. Système selon l'une quelconque des revendications 4 à 12, dans lequel la machine électrique (97) est commandée et configurée pour fonctionner en mode générateur et convertir une puissance mécanique excédentaire en énergie électrique utile.

14. Procédé d'entraînement d'un compresseur alternatif (1), comprenant les étapes consistant à :
fournir un compresseur alternatif (1) avec au moins un cylindre (3), un piston (7) mobile de manière coulissante dans ledit cylindre (3), un vilebrequin (31) pour déplacer ledit piston (7) dans ledit cylindre (3) ;
fournir un moteur Stirling (50) avec une extrémité chaude, une extrémité froide et un arbre de sortie (63) ;
relier par entraînement l'arbre de sortie (63) du moteur Stirling (50) au vilebrequin (31) du compresseur alternatif (1) ;
fournir de l'énergie thermique à l'extrémité chaude du moteur Stirling (50) et convertir partiellement l'énergie thermique en une puissance mécanique avec ledit moteur Stirling (50) ; et
appliquer ladite puissance mécanique au vilebrequin (31) du compresseur alternatif (1) ;
**caractérisé par** la fourniture d'une puissance supplémentaire au compresseur alternatif (1) avec un moteur alternatif à combustion interne (105) et une liaison d'entraînement (115) entre le moteur alternatif à combustion interne (105) et le compresseur alternatif (1) ; et
le transfert de la chaleur perdue du moteur à combustion interne (105) à l'extrémité chaude du moteur Stirling (50) par un circuit de transfert de chaleur (117).
